# EUROPÄISCHE PATENTSCHRIFT

(11) **EP 2 421 120 B1**
(45) Veröffentlichungstag und Bekanntmachung des Hinweises auf die Patenterteilung: **22.04.2020**
(21) Anmeldenummer: 11177744.7
(22) Anmeldetag: 17.08.2011
(51) Int. Cl.: H02J 9/06, H05B 37/02

(54) **Spannungsüberwachung einer elektrischen Versorgung mit Busanschluss**
Voltage monitor of an electric supply with bus connection
Dispositif de surveillance de la tension d'une alimentation électrique avec connexion à un bus

(30) Priorität: 17.08.2010 DE 102010039406
(43) Veröffentlichungstag der Anmeldung: 22.02.2012
(73) Patentinhaber: Zumtobel Lighting GmbH, 6850 Dornbirn (AT); Zumtobel Lighting GmbH, 32657 Lemgo (DE)
(72) Erfinder: Klocker, Bernhard, 6850 Dornbirn (AT); Schönauer, Michael, 81243 München (DE); Wittmann, Gerhard, 81247 München (DE)
(74) Vertreter: Thun, Clemens

(56) Entgegenhaltungen:
- EP-A1- 1 954 105
- DE-A1- 10 041 521
- DE-B3-102008 017 533
- NN: "DALI Pro Tasterkoppler", , 31. Dezember 2009 (2009-12-31), XP002719507, Gefunden im Internet: URL:http://www.osram.com/media/resource/hi res/334697/95320/Technical%20instructions. pdf [gefunden am 2014-01-30]

## Beschreibung

Die vorliegende Erfindung betrifft ein Beleuchtungssystem aufweisend eine Notlichtversorgung und einen Busphasenwächter zur Überwachung einer Stromversorgung, der Überwachungsmittel zur Überwachung der Stromversorgung und Kommunikationsmittel zum Austausch von Daten mit einem Steuerbus aufweist. Die Überwachungsmittel und Kommunikationsmittel stehen dabei vorzugsweise in Verbindung miteinander.

Bei Beleuchtungssystemen ist es zumeist notwendig, dass sich bei Ausfall der Stromversorgung bzw. bei Absinken der Versorgungsspannung eine Notstromversorgungseinrichtung aktiviert, die es ermöglicht zumindest sicherheitsrelevante Teile des Beleuchtungssystems weiter zu betreiben.

Des Weiteren kann es insbesondere in größeren Gebäuden erforderlich sein, dass bei Ausfall der Stromversorgung oder einem Absinken der Versorgungsspannung Rettungszeichenleuchten oder Sicherheitsleuchten bzw. insgesamt eine zentrale Notlichtversorgung angeschaltet wird, um die Sicherheit der sich im Gebäude befindlichen Personen zu gewährleisten.

Um nun einen derartigen Ausfall der Stromversorgung bzw. ein Absinken der Versorgungsspannung feststellen zu können, werden üblicherweise sogenannte Phasenwächtermodule eingesetzt, die mit den verschiedenen Phasen und eventuell auch dem Neutralleiter eines Stromversorgungsnetzes verbunden sind und dadurch die Stromversorgung überwachen.

Derzeit gibt es im Wesentlichen zwei Arten von Phasenwächtern, wobei bei der einen ein Relais im Phasenwächter zum Einsatz kommt, das im störungsfreien Betrieb angezogen ist. Sobald nun ein Ausfall der Stromversorgung vorliegt öffnet das Relais und unterbricht eine sogenannte Phasenwächterschleife, wodurch ein Störfall in der Stromversorgung signalisiert wird. Das Relais wird hierbei direkt durch die Stromversorgung betrieben, weshalb hier keine weitere externe Stromversorgung des Phasenwächters notwendig ist.

Derartige Phasenwächter unterbrechen allerdings jedoch lediglich eine Phasenwächterschleife und können nicht direkt aktiv eine Störung der Stromversorgung beispielsweise an eine Notstromversorgungseinrichtung mitteilen um diese zu aktivieren. Dementsprechend existiert auch noch eine zweite Art von Phasenwächtern, die über einen System- bzw. Steuerbus in eine Notlichtanlage eingebunden sind und auch über diesen Steuerbus mit Energie versorgt werden. Somit wird der Phasenwächter auch während eines Ausfalls der Stromversorgung über den Steuerbus weiterhin mit Energie versorgt, wodurch er in der Lage ist, aktiv an eine entsprechende Stelle eine Störung zu übermitteln.

Bei beiden Arten von Phasenwächtern ergibt sich nun das Problem, dass lediglich eine Überwachung einer Stromversorgung, beispielsweise eines Drei-Phasennetzes inklusive Neutralleiter, möglich ist und nicht auch noch weitere Einrichtungen, wie beispielsweise Sensoren einer Brandmeldeanlage oder dergleichen, überwacht werden können. Dies ergibt sich insbesondere daraus, dass bei der ersten Variante während eines Ausfalls der Stromversorgung den Phasenwächtern keine Energie zur Verfügung steht und dementsprechend weitere Überwachungseingänge nicht überwacht werden können und bei der zweiten Variante das Problem besteht, dass die Leistung, die über den Steuerbus übertragen werden kann, dauerhaft zu gering ist, um mehrere Überwachungs- bzw. Alarmeingänge zu betreiben.

Aus der DE 100 41 521 A1 ist ein Fern-Stromzufuhrsystem bekannt, welches bei einem teilnehmerseitigen Netzstromfehlers eine Fern-Stromzufuhr zu einer Netzwerkabschlussvorrichtung ermöglicht.

Aus der DE 10 2008 017533 B3 ist ein Splitter eines seriellen Datenbusses bekannt, der in einer Sicherheitsbeleuchtungsanlage verwendet werden kann. Der Splitter kann energetisch fremdversorgt sein oder seine Betriebsenergie aus speziellen Splitterversorgungsbussen beziehen.

Aufgabe der vorliegenden Erfindung ist es somit, ein Beleuchtungssystem zu entwickeln, das neben der Überwachung der Stromversorgung auch die Überwachung anderer Einrichtungen ermöglicht.

Die Aufgabe wird durch ein Beleuchtungssystem aufweisend eine Notlichtversorgung und einen Busphasenwächter zur Überwachung einer Stromversorgung gemäß Anspruch 1 gelöst. Vorteilhafte Weiterbildungen der Erfindung sind Gegenstand der abhängigen Ansprüche.

Erfindungsgemäß wird ein Beleuchtungssystem aufweisend eine Notlichtversorgung und ein Busphasenwächter zur Überwachung einer Stromversorgung vorgeschlagen, der Überwachungsmittel zur Überwachung der Stromversorgung und Kommunikationsmittel zum Austausch von Daten mit einem System- bzw. Steuerbus aufweist, die vorzugsweise miteinander in Verbindung stehen. Hierbei ist der Busphasenwächter derart ausgestaltet, dass er über den Steuerbus und über die zu überwachende Stromversorgung Energie beziehen kann, wobei die Energieversorgung des Busphasenwächters während eines Ausfalls oder eines Absinkens der zu überwachenden Stromversorgung über den Steuerbus und ansonsten über die zu überwachende Stromversorgung erfolgt. Die Kommunikationsmittel sind dazu ausgebildet sind bei einem Ausfall oder einem Absinken der zu überwachenden Stromversorgung eine Warn- bzw. Fehlermeldung über den Steuerbus auszugeben, um eine Notlichtversorgung zu aktivieren. Der Busphasenwächter weist außerdem weitere Überwachungsmittel auf, die zur Überwachung von Erfassungs-/Kontrollmitteln geeignet sind, wobei die Erfassungs-/Kontrollmittel vorzugsweise außerhalb des Busphasenwächters angeordnet sind.

Durch diese besondere Ausgestaltung des Beleuchtungssystems und des Busphasenwächters ist es nunmehr möglich, dass während des störungsfreien Betriebs dem Busphasenwächter über die zu überwachende Stromversorgung ausreichend Leistung zur Verfügung gestellt wird, und gleichzeitig der Busphasenwächter auch während des Störungsfalls über den Steuerbus mit Energie versorgt werden kann. Diese Vorteile sind insbesondere für die vorgesehenen weiteren Überwachungsmittel, die zur Überwachung von Erfassungs-/Kontrollmitteln geeignet sind, von Bedeutung.

Diese weiteren Überwachungsmittel können dann mit dem Kommunikationsmitteln in Verbindung stehen.

Bei den Erfassungs-/Kontrollmitteln kann es sich beispielsweise um Sensoren einer Brandmeldeanlage oder dergleichen handeln, die an Anschlüssen der weiteren Überwachungsmittel angeschlossen sind.

Die Überwachungs- und Kommunikationsmittel weisen des Weiteren vorteilhafter Weise Anschlüsse auf, an die zum einen die verschiedenen Phasen und der Neutralleiter der zu überwachenden Stromversorgung und zum anderen der Steuerbus angeschlossen werden können.

Eine weitere vorteilhafte Ausgestaltung der Erfindung besteht darin, dass der Busphasenwächter Mittel zur Selbstkontrolle aufweist, die vorzugsweise mit den Kommunikationsmitteln in Verbindung stehen.

Nachfolgend soll die Erfindung anhand von Ausführungsbeispielen und der beiliegenden Zeichnung näher erläutert werden. Es zeigt:

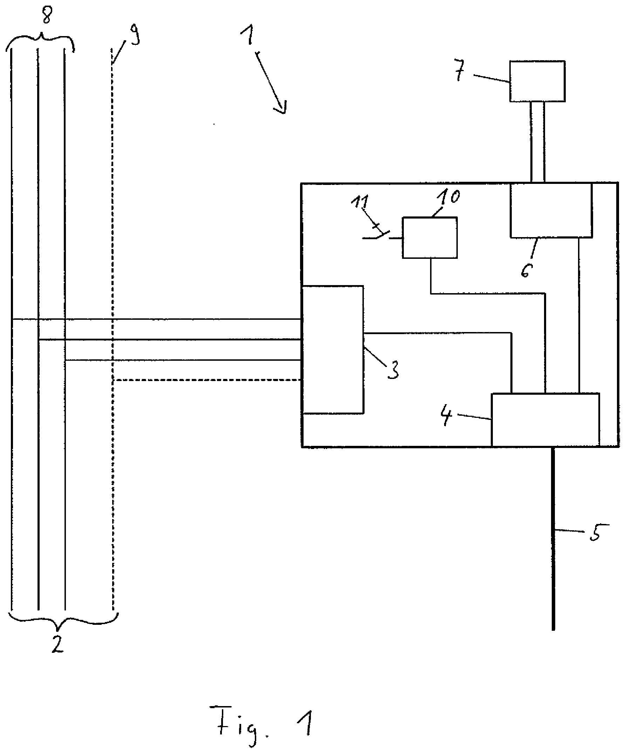

- Figur 1: eine schematische Darstellung eines Busphasenwächters.

In Figur 1 ist ein Busphasenwächter 1 zur Überwachung einer Stromversorgung 2 gezeigt, der Überwachungsmittel 3 zur Überwachung der Stromversorgung 2 und Kommunikationsmittel 4 zum Austausch von Daten mit einem Steuerbus 5 aufweist, wobei der Busphasenwächter 1 der Teil eines nicht gezeigten erfindungsgemäßen Beleuchtungssystems ist, dass neben dem Busphasenwächter 1 auch eine Notlichtversorgung aufweist. Die Überwachungsmittel 3 weisen hierbei Anschlüsse auf, an die sowohl die verschiedenen Phasen 8 als auch der Neutralleiter 9 der zu überwachenden Stromversorgung 2 angeschlossen sind. Die Überwachungsmittel 3 überwachen dann ständig die Phasen 8 und den Neutralleiter 9 auf ein Absinken bzw. einen Ausfall der Versorgungsspannung. Sobald die Versorgungsspannung nicht mehr innerhalb eines vorgesehenen Spannungsfensters liegt oder vollständig ausfällt geben dann die Kommunikationsmittel 4, die mit den Überwachungsmitteln 3 in Verbindung stehen, eine entsprechende Warn- bzw. Fehlermeldung über den Steuerbus 5 aus, wodurch dann eine Notstromversorgungseinrichtung bzw. eine zentrale Notlichtversorgung aktiviert werden kann. Das zu überwachende Spannungsfenster kann hierbei durch ein internes Setting eingestellt werden.

Bei dem Busphasenwächter 1 zur Überwachung einer Stromversorgung 2 ist nun vorgesehen, dass dessen Energieversorgung sowohl über die zu überwachende Stromversorgung 2 als auch über den Steuerbus 5 erfolgen kann.

Im Einzelnen ist dabei dann vorgesehen, dass während des störungsfreien Betriebs, also solange die Versorgungsspannung innerhalb des vorgegebenen Spannungsfensters liegt, der Busphasenwächter 1 durch die zu überwachende Stromversorgung 2 versorgt wird. Sobald dann die Versorgungsspannung außerhalb des Spannungsfensters liegt, bzw. vollständig ausfällt, ist die Energieversorgung des Busphasenwächters 1 weiterhin noch über den Steuerbus 5 möglich, wodurch der Busphasenwächter 1 nicht inaktiv wird sondern weiterhin in der Lage ist, entsprechende Fehlermeldungen an eine Notstromversorgungseinrichtung bzw. eine zentrale Notlichtversorgung über den Steuerbus 5 zu übermitteln.

Der Busphasenwächter 1 weist außerdem noch weitere Überwachungsmittel 6 auf, welche Anschlüsse bzw. Alarmeingänge umfassen, an die Erfassung-/Kontrollmittel 7 angeschlossen werden können oder für weitere Phasenwächterschleifen konventioneller Art zur Verfügung stehen. Bei den Erfassungs-/Kontrollmitteln 7 kann es sich beispielsweise um Sensoren einer Brandmeldeanlage oder dergleichen handeln.

Durch die Ausgestaltung des Busphasenwächters 1 mit zwei Möglichkeiten der Energieversorgung ist es nunmehr möglich, dass während des störungsfreien Betriebs derartige Erfassungs-/Kontrollmittel 7 nicht über den Steuerbus 5 mit Energie versorgt werden müssen, sondern über die zu überwachende Stromversorgung 2, wodurch eine deutlich höhere Leistung ermöglicht wird. Hierbei ist es dann beispielsweise möglich, dass ein eingeprägter Strom zur Überwachung fließt.

Bei dem Busphasenwächter 1 kann dann des Weiteren noch vorgesehen sein, dass dieser zyklisch auf seine Funktionstüchtigkeit überwacht wird. Dies kann beispielsweise über den Steuerbus 5 erfolgen, wobei ein Eigentest (Phasenausfall) ausführbar ist. Der Busphasenwächter 1 weist hierfür Mittel 10 zur Selbstkontrolle auf, die vorzugsweise mit den Kommunikationsmitteln 4 verbunden sind. Des Weiteren kann auch noch ein Testknopf 11 an dem Busphasenwächter 1 vorgesehen sein, der einen manuellen Selbsttest ermöglicht.

Bei der Funktionsfähigkeit kann beispielsweise der interne Speicher überprüft werden. Durch diese Möglichkeit der Selbstkontrolle wird ein größtmögliches Maß an Funktionssicherheit gewährleistet, wodurch beispielsweise der Sicherheitsintegrationslevel 2 (SIL 2) erreicht werden kann.

## Patentansprüche

1. Beleuchtungssystem aufweisend eine Notlichtversorgung und einen Busphasenwächter,
wobei der Busphasenwächter (1) zur Überwachung einer Stromversorgung (2) vorgesehen ist und Überwachungsmittel (3) zur Überwachung der Stromversorgung (2) und Kommunikationsmittel (4) zum Austausch von Daten mit einem Steuerbus (5) aufweist,
wobei die Überwachungsmittel (3) und Kommunikationsmittel (4) vorzugsweise miteinander in Verbindung stehen,
wobei der Busphasenwächter (1) derart ausgestaltet ist, dass er über den Steuerbus (5) und über die zu überwachende Stromversorgung (2) mit Energie versorgt werden kann, wobei die Energieversorgung des Busphasenwächters (1) während eines Ausfalls oder eines Absinkens der zu überwachenden Stromversorgung (2) über den Steuerbus (5) und ansonsten über die zu überwachende Stromversorgung (2) erfolgt,
wobei die Kommunikationsmittel (4) dazu ausgebildet sind bei einem Ausfall oder einem Absinken der zu überwachenden Stromversorgung (2) eine Warn- bzw. Fehlermeldung über den Steuerbus (5) auszugeben, um eine Notlichtversorgung zu aktivieren,
und wobei der Busphasenwächter (1) weitere Überwachungsmittel (6) aufweist, die zur Überwachung von Erfassungs-/Kontrollmitteln (7) geeignet sind, wobei die Erfassungs-/Kontrollmittel (7) vorzugsweise außerhalb des Busphasenwächters (1) angeordnet sind.

2. Beleuchtungssystem nach Anspruch 1,
**dadurch gekennzeichnet,**
**dass** die weiteren Überwachungsmittel (6) mit den Kommunikationsmitteln (4) in Verbindung stehen.

3. Beleuchtungssystem nach einem der Ansprüche 1-2,
**dadurch gekennzeichnet,**
**dass** die weiteren Überwachungsmittel (6) Anschlüsse aufweisen, an die die Erfassungs-/Kontrollmittel (7) angeschlossen werden können, wobei es sich bei den Erfassungs-/Kontrollmitteln (7) vorzugsweise um Sensoren einer Brandmeldeanlage handelt.

4. Beleuchtungssystem nach einem der vorherigen Ansprüche,
**dadurch gekennzeichnet,**
**dass** die Überwachungsmittel (3) zur Überwachung der Stromversorgung (2) Anschlüsse aufweisen, an die die verschiedenen Phasen (8) und der Neutralleiter (9) der zu überwachenden Stromversorgung (2) angeschlossen werden können.

5. Beleuchtungssystem nach einem der vorherigen Ansprüche,
**dadurch gekennzeichnet,**
**dass** die Kommunikationsmittel (4) Anschlüsse aufweisen, an die der Steuerbus (5) angeschlossen werden kann.

6. Beleuchtungssystem nach einem der vorherigen Ansprüche,
**dadurch gekennzeichnet,**
**dass** der Busphasenwächter (1) Mittel (10) zur Selbstkontrolle aufweist, die vorzugsweise mit den Kommunikationsmitteln (4) in Verbindung stehen.

## Claims

1. A lighting system having an emergency light supply and a bus phase monitor,
wherein the bus phase monitor (1) is provided for monitoring a current supply (2) and has monitoring means (3) for monitoring the current supply (2) and communications means (4) for the exchange of data with a control bus (5),
wherein the monitoring means (3) and communications means (4) are preferably connected with each other,
wherein the bus phase monitor (1) is designed in such a manner that it can be supplied with energy via the control bus (5) and via the current supply (2) to be monitored,
wherein the energy supply of the bus phase monitor (1) is provided during a failure or a drop in the current supply (2) to be monitored via the control bus (5) and otherwise via the current supply (2) to be monitored,
wherein the communications means (4) are designed to output a warning or error message via the control bus (5) when the current supply (2) to be monitored fails or drops, in order to activate an emergency light supply,
and wherein the bus phase monitor (1) has further monitoring means (6), which are suitable for monitoring detection-/control means (7), wherein the detection-/control means (7) are preferably arranged outside of the bus phase monitor (1).

2. The lighting system according to Claim 1,
**characterized in**
**that** the further monitoring means (6) are connected to the communications means (4).

3. The lighting system according to any one of Claims 1-2,
**characterized in**
**that** the further monitoring means (6) have connections, to which the detection-/control means (7) can be connected, wherein the detection-/control means (7) are preferably sensors of a fire alarm system.

4. The lighting system according to any one of the preceding claims,
**characterized in**
**that** the monitoring means (3) for monitoring the current supply (2) have connections, to which the different phases (8) and the neutral conductor (9) of the current supply (2) to be monitored can be connected.

5. The lighting system according to any one of the preceding claims,
**characterized in**
**that** the communications means (4) have connections, to which the control bus (5) can be connected.

6. The lighting system according to any one of the preceding claims,
**characterized in**
**that** the bus phase monitor (1) has means (10) for self-control, which is preferably connected to the communication means (4).

## Revendications

1. Système d'éclairage, comportant une alimentation en lumière de secours et un contrôleur de phase de bus,
le contrôleur de phase de bus (1) étant prévu pour la surveillance d'une alimentation électrique (2), et comportant des moyens de surveillance (3) pour la surveillance de l'alimentation électrique (2), et des moyens de communication (4) pour l'échange de données avec un bus de commande (5),
les moyens de surveillance (3) et les moyens de communication (4) étant de préférence en liaison les uns avec les autres,
le contrôleur de phase de bus (1) étant constitué de telle sorte qu'il peut être alimenté en énergie par le biais du bus de commande (5) et par le biais de l'alimentation électrique (2) à surveiller, l'alimentation en énergie du contrôleur de phase de bus (1) s'effectuant, pendant une coupure ou une diminution de l'alimentation électrique (2) à surveiller, par le biais du bus de commande (5) et sinon par le biais de l'alimentation électrique (2) à surveiller,
les moyens de communication (4) étant formés pour, lors d'une coupure ou d'une diminution de l'alimentation électrique (2) à surveiller, délivrer un message d'avertissement ou respectivement d'erreur par le biais du bus de commande (5) afin d'activer l'alimentation en lumière de secours,
et le contrôleur de phase de bus (1) comportant d'autres moyens de surveillance (6) qui sont appropriés pour la surveillance de moyens de détection/contrôle (7), les moyens de détection/contrôle (7) étant de préférence disposés à l'extérieur du contrôleur de phase de bus (1).

2. Système d'éclairage selon la revendication 1,
**caractérisé en ce que**
les autres moyens de surveillance (6) sont en liaison avec les moyens de communication (4).

3. Système d'éclairage selon l'une des revendications 1-2,
**caractérisé en ce que**
les autres moyens de surveillance (6) comportent des connexions auxquelles peuvent être connectés les moyens de détection/contrôle (7), dans lequel, concernant les moyens de détection/contrôle (7), il s'agit de préférence de capteurs d'une installation d'alarme incendie.

4. Système d'éclairage selon l'une des revendications précédentes,
**caractérisé en ce que,**
pour la surveillance de l'alimentation électrique (2), les moyens de surveillance (3) comportent des connexions auxquelles peuvent être connectés les différentes phases (8) et le conducteur neutre (9) de l'alimentation électrique (2) à surveiller.

5. Système d'éclairage selon l'une des revendications précédentes,
**caractérisé en ce que**
les moyens de communication (4) comportent des connexions auxquelles peut être raccordé le bus de commande (5).

6. Système d'éclairage selon l'une des revendications précédentes,
**caractérisé en ce que**
le contrôleur de phase de bus (1) comporte des moyens (10) d'autocontrôle qui sont de préférence en liaison avec les moyens de communication (4).
